# EUROPEAN PATENT SPECIFICATION

(11) **EP 4 001 123 B1**
(45) Date of publication and mention of the grant of the patent: **06.03.2024**
(21) Application number: 20206944.9
(22) Date of filing: 11.11.2020
(51) Int. Cl.: B64D 43/00, B64D 31/04, B64D 31/14, G05D 1/00, B64D 45/00

(54) **AIRCRAFT OPERATING METHOD, AIRCRAFT CONTROL PANEL ARCHITECTURE, AND AIRCRAFT**
FLUGZEUGBETRIEBSVERFAHREN, FLUGZEUGSTEUERPANEELARCHITEKTUR UND FLUGZEUG
PROCÉDÉ DE FONCTIONNEMENT D'AÉRONEF, ARCHITECTURE DE PANNEAU DE COMMANDE D'AÉRONEF ET AÉRONEF

(43) Date of publication of application: 25.05.2022
(73) Proprietor: Volocopter GmbH, 76646 Bruchsal (DE)
(72) Inventor: Medvedev, Andrey, 76694 Forst (DE); Courteney, Hazel, West Sussex, Sussex RH19 1DJ (GB)
(74) Representative: LBP Lemcke, Brommer & Partner Patentanwälte mbB

(56) References cited:
- WO-A1-2017/184439
- US-A- 3 514 055
- US-B1- 10 106 269
- US-B1- 10 242 582
- US-B1- 10 676 209
- Press: "XPAD3 V2. 2rd Generation - sUAS News - The Business of Drones", , 26 February 2020 (2020-02-26), pages 1-2, XP055793683, Retrieved from the Internet: URL:https://www.suasnews.com/2020/02/xpad3 -v2-2rd-generation/ [retrieved on 2021-04-08]
- Collie Scott: "Drone controllers Evolve to include a second screen", , 21 December 2016 (2016-12-21), XP055793687, Retrieved from the Internet: URL:https://newatlas.com/xdynamics-evolve- dual-screen-drone-controller/47063/ [retrieved on 2021-04-08]

## Description

The present invention relates to a method of operating an aircraft with multiple actuators, preferably multiple propulsion units, most preferably electrically powered propulsion units, according to the preamble of appended claim 1.

The present invention also relates to a control panel architecture in an aircraft with multiple actuators, preferably multiple propulsion units, most preferably electrically powered propulsion units, according to the preamble of appended claim 6.

Furthermore, the present invention relates to an aircraft with multiple actuators, preferably multiple propulsion units, most preferably electrically powered propulsion units, according to the preamble of appended claim 11.

WO 2017/184439 A1 discloses an automatic recovery system in an aircraft, wherein a processor monitors one or more operating parameters of the aircraft to detect a failure of the forward propulsion system based on the operating parameters, and then automatically transitions the aircraft to the vertical propulsion system for landing.

US 10,242,582 B1 discloses a system for assisting an aircraft in an emergency landing, wherein a processor calculates a maximum distance the aircraft can travel without engine power, calculates a range for the aircraft based on the maximum distance and generates a display of the range and provide the display to a display system of the aircraft. One or more landing locations may be identified on the display and the pilot may select a landing location,
Controlling multiple, especially more than ten, system components with the same functions individually is a specific challenge for human-machine interface (HMI) developers and human factors engineers. This is particularly true for multirotor aircraft wherein a (human) pilot must be able to control the operation of individual propulsion units safely and without impairing on overall aircraft safety. It is particularly important in the case of an aircraft, which has to undergo certification processes in order be publicly useable. Developing HMI for distributed systems where individual control of multiple system components with the same function is required, presents a challenge in part of providing proper characteristics satisfying certification requirements for human factors.

Including features that assist a pilot to perform correct actions in emergency situations while minimizing potential errors and to support error management are import issues that are an integral part of the aircraft certification process.

It is therefore an object of the present invention to propose a solution in which the HMI will simplify the pilot's decision making and minimize the potential of erroneous actions while executing these decisions for a multirotor aircraft wherein a (human) pilot must be able to control the operation of individual propulsion units safely and without impairing on overall aircraft safety.

The object is achieved by means of a method with the features of appended claim 1, by means of a control panel architecture with the features of appended claim 6, and by means of an aircraft with the features of appended claim 11. Advantageous further embodiments of the invention are defined in the subclaims.

According to the invention, a method of operating an aircraft with multiple actuators, preferably multiple propulsion units, most preferably electrically powered propulsion units, comprises: i) monitoring an operational state of said multiple actuators; ii) when detecting a malfunctioning or failure of any one of said actuators, indicating said malfunctioning or failure to a pilot in command of the aircraft; iii) controlling a human machine interface of the aircraft to display and enable a limited choice of possible operating measures in connection with said malfunctioning or failure to the pilot in command; and iv) programming at least one control element in association with said one actuator to perform said measures when actuated by the pilot in command, wherein in a first mode, step iii) is performed automatically upon detection of said malfunctioning or failure; said method being characterized in that in a second mode, step iii) is performed upon selection of said one actuator by a user, e.g., by the pilot in command.

A control panel architecture in an aircraft with multiple actuators, preferably multiple propulsion units, most preferably electrically powered propulsion units, according to the invention comprises: a) a respective monitoring unit associated with each actuator for monitoring a condition thereof; b) a data acquisition and processing unit in connection with said monitoring units for acquiring and processing condition data of said multiple actuators; and c) a human machine interface unit in connection with said data acquisition and processing unit, said human machine interface comprising: ca) a display controllable by said data acquisition and processing unit to display a limited choice of possible operating measures in accordance with said condition data to a pilot in command of the aircraft; and cb) at least one control element associable with at least one actuator and controllable by said data acquisition and processing unit to perform said measures when actuated by the pilot in command. The control panel architecture further comprises a selecting element in connection with said data acquisition and processing unit for selecting an operational mode thereof, wherein in a first operational mode said display according to feature ca) and said at least one control element according to feature cb) is set up automatically, and wherein in a second operational mode said display according to feature ca) and said at least one control element according to feature cb) is set up in accordance with a state of said selecting element, in particular with a state that is associated with a selected one of said actuators; wherein the selecting element allows selecting between an automatic mode and a further mode for selecting any one of said multiple actuators, particularly manually by the pilot in command, wherein said automatic mode corresponds to said first operational mode and said further mode corresponds to said second operational mode.

According to the present invention, an aircraft with multiple actuators, preferably multiple propulsion units, most preferably electrically powered propulsion units, comprises the control panel architecture in accordance with the present invention.

The invention is not limited to controlling propulsion units, but encompasses any kind of safety-relevant actuator in an aircraft, e.g., an actuated flap or a payload winch.

As stated above, the gist of the present invention comprises that a dedicated human machine interface is selectively controlled to display and enable only a limited choice of possible operating measures in connection with a malfunctioning or failure of any one of the aircraft's actuators (e.g., propulsion units) to the pilot in command. This further involves programming or implementing at least one control element in association with a failed or malfunctioning actuator to perform said limited choice of operating measures when actuated by the pilot in command. In this way it is possible to prevent a so-called single point of failure by excluding a corresponding operation from the limited choice of operating measures presented to the pilot. In terms of the proposed control panel architecture, said control panel architecture is based on sensor inputs (from said monitoring units associated with each actuator for monitoring a condition thereof), so that the control panel can automatically display certain functions to a pilot (human pilot or autopilot) which can then be easily conducted by the respective pilot in command - PIC.

As already mentioned the method according to the present invention comprises a first mode, in which step iii) is performed automatically upon detection of said malfunctioning or failure. In other words: A operational state monitoring system of the aircraft detects malfunctioning or failure of any one of the aircraft's actuators and then automatically controls said human machine interface of the aircraft to display and enable said limited choice of possible operating measures for to counter said malfunctioning or failure to a pilot in command, which need not be a human pilot.

This is particularly advantageous since it does not require any pilot action for setting up said human machine interface.

Furthermore, the method according to the present invention comprises a second mode, in which step iii) is performed upon selection of said one actuator by a user, in particular by the pilot in command, which again need not be a human pilot.

This is particular advantageous since it enables setting up of said human machine interface even in case of an interruption of a data path or data transmission between said monitoring system and the human machine interface, i.e., a corresponding control panel. In such a case, the pilot is able to select a malfunctioning or failed actuator in order set up the human machine interface.

In a particularly advantageous embodiment of the method in accordance with the present invention, the method may comprise selecting said first mode or said second mode by means of user input. In this way, said user (e.g., the pilot in command) has complete control and full authority on the selection of operating measure.

In another embodiment, the method according to the present invention comprises in step iii) at least the measure of powering down (shutting off) said one actuator by a user, in particular by corresponding programming or implementing of said control element in step iv) and by subsequent actuation of said control element by said user, e.g., the pilot in command.

In particular, the measure of powering down said one actuator can be limited to powering down only said one actuator. Said limited choice of possible operating measures presented to the pilot in command will not include powering down any other actuator, thus eliminating said single point of failure.

On the other hand, in another embodiment of the method according to the present invention, step iii) may additionally comprise at least the measure of powering up a plurality of said actuators, preferably all of said actuators, by a user, e.g., the pilot in command, in particular by corresponding programming or implementing of a common dedicated control element and by subsequently actuating said control element by the user.

In this way, while prohibiting powering down of more than one actuator, it may still be possible to power up a plurality or even all of said actuators, thus greatly simplifying aircraft operation, especially a power-up sequence.

In particular, said last embodiment of the present invention may be limited to said first mode, wherein step iii) is performed automatically upon detection of a malfunctioning or failure.

On the other hand, in case of said second mode, in which step iii) is performed upon selection of said one actuator by a user, step iii) may additionally comprise at least the measure of powering up only said one actuator by the user, in particular by corresponding programming or implementing of a dedicated control element and by subsequently actuating said control element by the user.

With this embodiment, in case of an interruption of data connection between said monitoring system and the control panel, said limiting choice of possible operating measures presented to the pilot may be limited to powering down only said one malfunctioning or failed actuator by a user, thus reducing operational risk.

As already stated above, the proposed control panel architecture according to the present invention comprises a data acquisition and processing unit which collects and processes condition data provided by the multiple actuators (e.g., propulsion units), i.e., by said monitoring system. The human machine interface unit, which is in connection with said data acquisition and processing unit, comprises a display, which is controllable by said data acquisition and processing unit to display only a limited choice of possible operating measures to the pilot in command. It further comprises at least one control element associable with at least one actuator and controllable by said data acquisition and processing unit to perform said limited choice of possible operating measures when actuated by the pilot in command. Again, said pilot in command need not be a human pilot.

The control panel architecture according to the present invention further comprises a selecting element in connection with said data acquisition and processing unit for selecting an operational mode thereof. In this context, the data acquisition and processing unit presents a first operational mode, in which said display according to feature ca) and said at least control element according to feature cb) are set up automatically. This case has been described above in connection with the method according to the present invention and is particularly useful if there is no failure in data connection between said monitoring system and the control panel architecture.

In the control panel architecture in accordance with the present invention, the selecting element allows selecting between an automatic mode and a further mode for selecting any one of said multiple actuators, particularly manually by the pilot in command. Said automatic mode corresponds to said first operational mode mentioned earlier and said further mode corresponds to said second operational mode mentioned earlier.

In this way, the proposed control panel architecture is capable of carrying out the method in accordance with the present invention.

In a further embodiment of the control panel architecture according to the present invention, said condition data is indicative of a malfunctioning or failure of any one of said actuator. This particular feature had been mentioned before in the context of the method in accordance with the present invention.

In yet another embodiment of the proposed control panel architecture, said at least one control element can be a power control element, particularly a power-down element for the at least one actuator, preferably for a malfunctioning or failing actuator.

In another embodiment of the control panel architecture in accordance with the present invention, there may be one such control element for each actuator that may be activated individually so that preferably only one such control element is active at the given point in time. Alternatively, there can be provided only one such physical control element that can be selectively associated or connected with different actuators for controlling a power state thereof. Said last embodiment may be particularly useful in terms of overall system simplification and cost reduction. With the other embodiment, system operation may be made easier, especially for a human pilot, since it is possible to arrange said multiple control elements in a spatial configuration that closely resembles a configuration of actuators, e.g., propulsion units within the actual aircraft.

In yet another embodiment, the control panel architecture according to the present invention may further comprise a relay unit in connection with said multiple actuators, and also with said data acquisition and processing unit, for controlling an operational state thereof in accordance with actuation of said at least one control element or in accordance with a state or an operational mode of said data acquisition and processing unit. Said relay unit may function as a sort of switch board that passes or routes control commands issued by the pilot in command via the human machine interface to the actual aircraft actuators. As stated before, an operational mode of the data acquisition and processing unit may influence a configuration of the relay unit (switch board) which then reacts accordingly in case of actuation of said at least one control element.

In yet a further embodiment, the control panel architecture in accordance with the present invention may comprise at least two control elements, one for powering down the at least one actuator, preferably said malfunctioning or failing actuator, and one for powering up the at least one actuator, preferably said malfunctioning or failing actuator, or for powering up a plurality of said actuators, in particular all of said actuators.

As stated above, each actuator may have a dedicated control element for powering down the corresponding actuator. In other words, there is one physical control element associated with each of said actuators, which may be an advantageous configuration in particular for a human pilot, as stated before. There can be another control element, which is preferably used for powering up at least said one malfunctioning or failing actuator. However, it is particularly useful to associate said further control element with all of said actuators at the same time, so that all of said actuators can be powered up by actuating only one control element. Again, it is possible to use control elements that are not physically linked to a given actuator but that can be associated or connected with different actuators, as required.

The data acquisition and processing unit may further comprise a second operational mode, in which said display according to feature ca) and said at least one control element according to feature cb) are set up in accordance with a state of said selecting element, in particular with a state that is associated with a selected one of said actuators.

This may comprise that in said second operational mode features ca) and cb) depend on said state of said selecting element, which is preferably operated by a user, e.g., the pilot in command. Said user chooses a selected one of said actuators by means of operating said selecting element, and then the features ca) and cb) are realized accordingly. In this context, the control elements are preferably arranged as explained in detail above in relation to said at least two control elements.

As stated above, a selection between the automatic mode and said further mode may happen automatically based on the state of a data connection between said monitoring system and said data acquisition and processing unit, wherein said automatic mode is preferably selected if said data connection is (fully) functional.

In order to facilitate aircraft operation for a human pilot, another advantageous embodiment of the control panel architecture in accordance with the present invention further comprises an additional display for displaying malfunctioning or failure of any one actuator to the pilot in command. The pilot in command may then use the displayed information for selecting between modes, as mentioned earlier, or for selecting an individual actuator in order set up the human machine interface accordingly. Said additional display can serve as a backup for displaying information on actuator status to the pilot in command.

Further advantages and details of the present invention will now be described in connection with exemplary embodiments as shown in the appended drawings.
- Figure 1: shows an embodiment of an aircraft in accordance with the present invention;
- Figure 2: shows a general overview of a control panel architecture in accordance with the present invention;
- Figure 3: shows a first embodiment of the control panel architecture in accordance with the present invention in a first operational state;
- Figure 4: shows the embodiments of Figure 3 in a second operational state;
- Figure 5: shows the embodiment of Figure 3 in a third operational state;
- Figure 6: shows another embodiment of the control panel architecture in accordance with the present invention in a first operational state;
- Figure 7: shows the embodiment of Figure 6 in a second operational state; and
- Figure 8: shows the embodiment of Figure 6 in a third operational state.

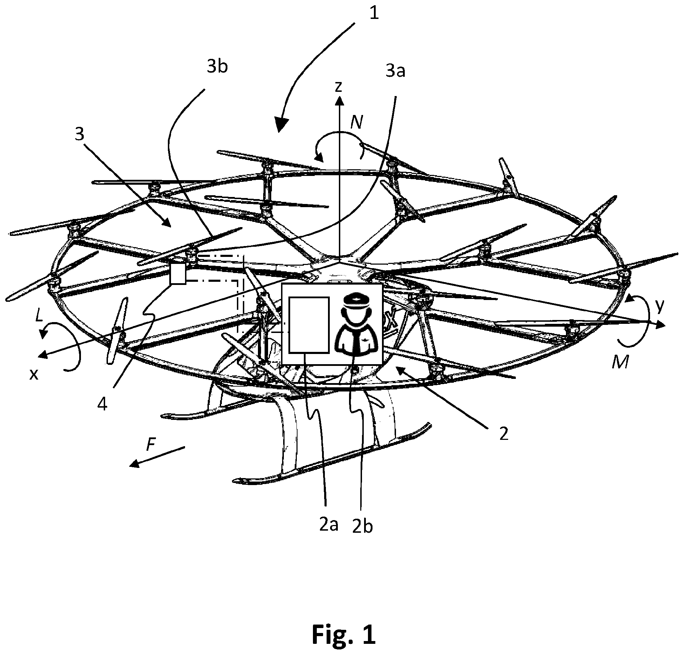

Figure 1 shows a possible configuration of the aircraft according to the invention as a multirotor eVTOL (electrically powered vertical take-off and landing) aircraft 1 with 18 drive or propulsions units (electrical propulsion unis - EPUs) 3, of which only one is explicitly designated in Figure 1. Each propulsion unit 3 comprises an electric motor 3a and a propeller 3b as shown in the illustration. According to the design of aircraft 1 in Figure 1, the drive units, in particular the propellers 3b, cannot be swivelled. x, y and z denote reference axes of aircraft 1; L, M and N denote the corresponding (control) moments.

Said propulsion units mentioned here and in the following are a typical example for the more generic term "actuator" used throughout the specification and claims. However, the invention is by no means restricted to actuators in the form of (electrically powered) propulsions units, but also encompasses other actuator types, such as actuated wings, flaps, winches, or other payload-related actuators. In the following, the term "unit" may also be used instead to designate all kinds of actuators.

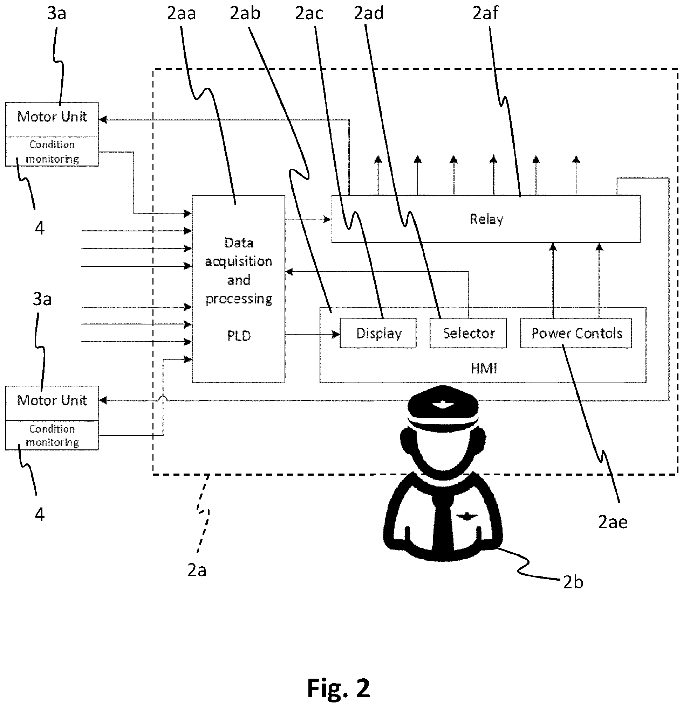

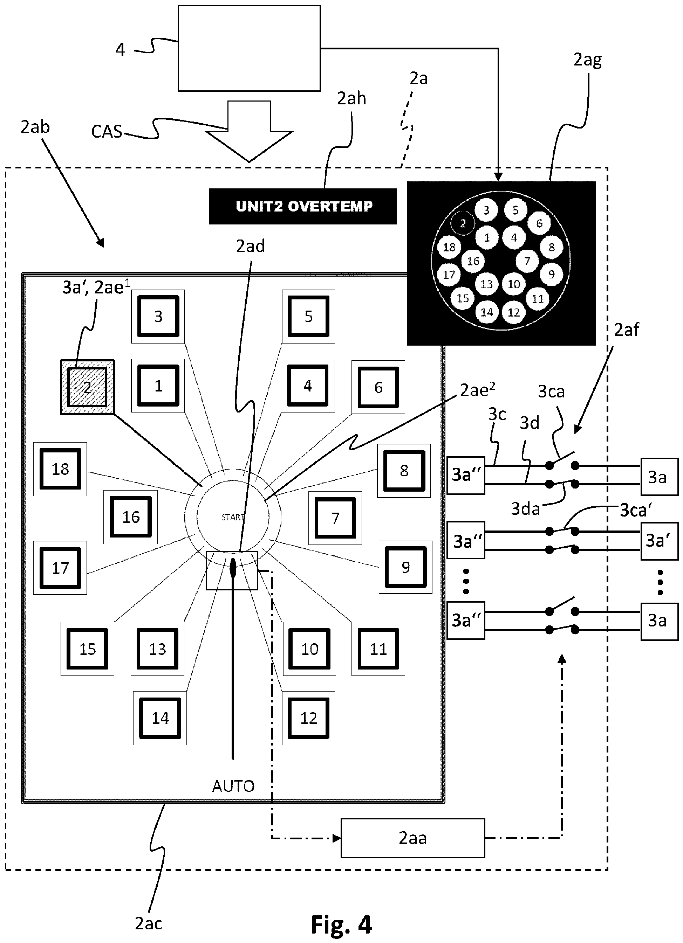

Aircraft 1 has a flight control unit at reference number 2, which is described in more detail below in Figures 2 through 8. Flight control unit 2 comprises a control panel architecture 2a according to the present invention which can be operated - without restriction - by a (human) pilot in command 2b. Reference number 4 designates, as an example, a sensor unit which is associated with propulsion unit 3 and operatively connected to the flight control unit 2 and to the control panel architecture 2a; flight control unit 2 will generally be connected with a large number of such sensor units 4 which are particularly designed and suitable for determining a (current) state of the associated propulsion unit 3. Preferably, every propulsion unit 3 has at least one such sensor 4. Human pilot 2b may transmit his/her control requirements to the aircraft 1, e.g., via a control stick or the like (not shown). Within the scope of the invention, however, the aircraft 1 is in particular also capable of flying without a human pilot 2b, i.e., by means of an autopilot or the like. The flight control unit 2 may also use a physical model of the aircraft 1 to determine a system state from sensor data, which is not further illustrated in Figure 4. The flight control unit 2 may control the aircraft 1 along a predicted and/or real-time adjusted trajectory by appropriate commanding of the propulsion units 3, as known to the skilled person.

Figure 2 shows the overall architecture of a control panel architecture 2a according to the present invention as comprised, e.g., in the aircraft 1 according to Figure 1 (reference number 2a). In Figure 2, said control panel architecture 2.1 is denoted by means of a dashed box. The control panel architecture 2a comprises a data acquisition and processing unit 2aa which can advantageously be implemented in the form of a PLD - programmable logic device, which is an electronic component used to build reconfigurable digital circuits. Unlike integrated circuits (IC) which consists of logic gates and have a fixed function, a PLD has an undefined function at the time of manufacture. Before the PLD can be used in a circuit, it must be programmed (reconfigured) by using a specialized program. The term PLD comprises logic IC technologies like PAL, PLA, GAL, CPLD and newer technologies like FPGAs (field programmable gate arrays). Control panel architecture 2a further comprises an HMI (human-machine interface) 2ab, which in turn comprises a display 2ac, a selector or selecting element 2ad, and power controls 2ae. In the embodiment of Figure 2, said power controls 2ae are devised - without limitation - in the form of two power controls (or power control elements), as denoted by means of the two vertical arrows that originate from said power controls 2ae. The control panel architecture 2a of Figure 2 further comprises a relay or relay unit 2af, which relay unit 2af is arranged between said power controls 2ae and motor units 3a.

The motor units of Figure 2 correspond to the electric motors 3a of the propulsion units 3 as shown in Figure 1. Each motor unit 3a has an associated condition monitoring unit ("condition monitoring"), which corresponds to the sensor units 4 mentioned in connection with Figure 1. An output of said condition monitoring units 4 serves as input to the data acquisition and processing unit 2aa. For reason of intelligibility, only two motor units 3a and corresponding sensor units 4 are shown in Figure 2. In the case of aircraft 1 according to Figure 1, there would be 18 such motor units 3a with corresponding condition monitoring units 4 (which are symbolized by means of horizontal arrows pointing toward data acquisition and processing unit 2aa in Figure 2).

The data acquisition and processing unit 2aa is operatively connected with the HMI 2ab for controlling the display 2ac and the power controls 2ae thereof. Selector 2ad is operatively connected with the data acquisition and processing unit 2aa for controlling an operational state or operational mode thereof. Both power controls 2ae and data acquisition and processing unit 2aa are operatively connected with relay 2af for controlling a configuration thereof (in the case of data acquisition and processing unit 2aa) and for providing an actuation signal to the relay 2af (in the case of power controls 2ae), which actuation signal is then forwarded to the motor units 3a in accordance with said configuration of relay 2af.

In principle, relay 2af is in operative connection with all motor units 3a for forwarding corresponding power control signals that are input through HMI 2ab by pilot in command 2b by means of said power controls 2ae. Pilot in command 2b observes display 2ac and operates selector 2ad and power controls 2ae, respectively. In the case of Figure 2, pilot in command 2b is a human pilot. However, the present invention also functions with pilot in command 2b being an autopilot or a remote operator.

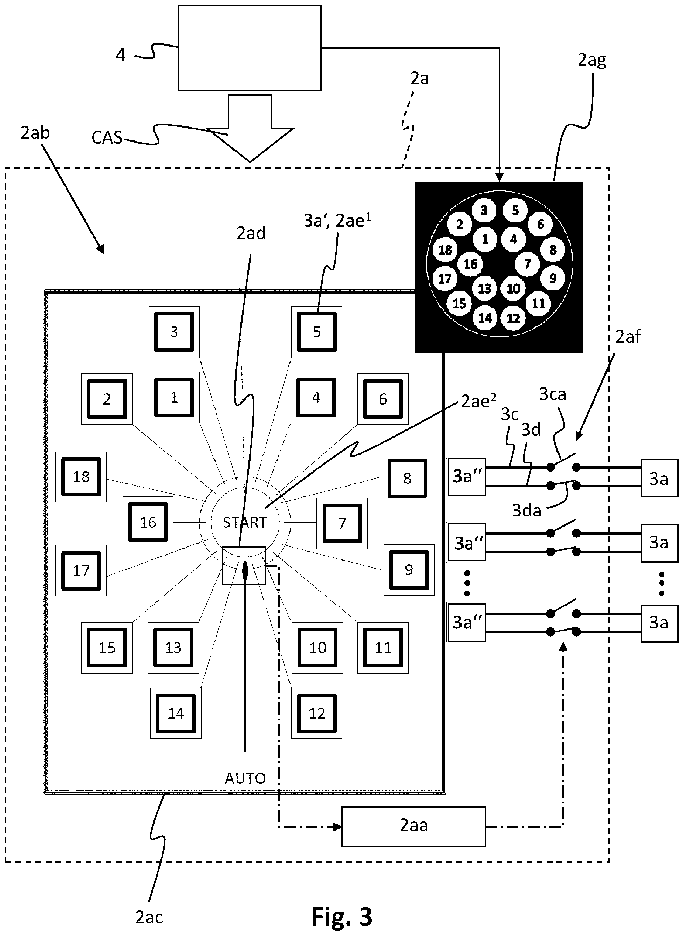

The gist of the present invention results in the fact that HMI 2ab, by means of a display 2ac and power controls 2ae, only presents a limited choice of operational measures to the pilot in command 2b such that the latter is less prone to making operational mistakes. This will now be explained in more detail by means of the embodiments shown in Figures 3 - 8.

In the following Figures, the same reference numbers are used to designate identical or at least functionally identical elements as in previous Figures 1 and 2.

Reference number 4 designates the aforementioned sensor units or condition monitoring units which function as a monitoring system, as described earlier. Arrow CAS denotes a so-called crew alerting system, which is used to pass on the sensor or monitoring information from monitoring system 4 to the control panel architecture 2a.

As shown in Figure 3, control panel architecture 2a further comprises an additional display 2ag, which shows a functional operating state of the individual aircraft's propulsion units that are marked by corresponding numbers 1 - 18 (cf. aircraft 1 of Figure 1). Display 2ac comprises an indicator for each motor unit 3a, only one of which indicators is denoted by means of reference number 3a' in Figure 3. Each of said indicators 3a' potentially also functions as a control element 2ae¹ for powering down a corresponding motor unit 3a. A button marked "START" in the centre of display 2ac, which button is denoted by reference number 2ae², serves to power up all of the motor units (propulsion units) 3a at once. To this end, selector 2ad is positioned at "AUTO", as shown. Display 2ac can be devised as a touch-sensitive display which allows free configuration. However, the invention is not limited in this way. For instance, display 2ac could also be configured with physical (hardware) buttons and switches, e.g., a dial switch for selector 2ad and push buttons for the control elements 2ae¹. As shown on the right-hand side of display 2ac, individual EPU controls 3a" are shown that correspond or are linked to the individual control elements 3a', 2ae¹ mentioned earlier. In other words, every control element 2ae¹ that corresponds to a particular propulsion unit or motor unit 3a is linked to a corresponding EPU control 3a". From each EPU control 3a" to a corresponding propulsion unit or motor unit 3a there are two physical connections 3c, 3d, each comprising a switching element 3ca, 3da, wherein at least said switching elements 3ca, 3da constitute the relay unit 2af. An operational state of the switching elements 3ca, 3da is controlled by the data acquisition and processing unit 2aa, as shown. For reason of intelligibility, this is only shown in detail for one motor unit or propulsion unit 3a.

As stated before, Figure 3 shows a nominal state of operation. CAS is fully functional, and no propulsion unit 3a experiences any failure or malfunctioning. Accordingly, further display 2ag does not display any particular state for any one of the propulsion units 3a. None of the control elements 2ae¹ is lit or highlighted, which would otherwise indicate an active state of said control element 2ae¹. Selector 2ad is set to "AUTO" mode. Data acquisition and processing unit 2aa controls relay 2af such that the switching elements 3ca are in an open state, while switching elements 3da are in a closed state. Switching elements 3ca correspond to the individual control elements 2ae¹ and can be used for shutting down or powering down a corresponding propulsion unit 3a by means of corresponding control elements 2ae¹, if active. In the case of Figure 3, none of the control elements 2ae¹ are active, and consequently all switching elements 3ca are in an open state. No propulsion unit 3a can be powered down.

In contrast, control element 2ae² is active and can be used to power up all propulsion units 3a at once with a single actuation of said control element 2ae². Consequently, all of the switching elements 3da used for powering up of the propulsion units 3a are in a closed state.

A pilot in command (not shown in Figure 3) can therefore power up all of the propulsion units 3a at once by pressing or otherwise actuating control element 2ae², while he/she cannot power down any of the propulsion units 3a by actuating control elements 2ae¹ since the latter are not activated.

Figure 4 shows the case in which EPU 2 (denoted "2" or "UNIT2") experiences a failure or malfunctioning. This is indicated on further display 2ag and is further indicated by means of highlighting corresponding control element 2ae¹ on display 2ac. Consequently, in the selected "AUTO" mode, data acquisition and processing unit 2aa controls relay 2af to additionally close switching element 3ca' that is comprised in physical connection with propulsion unit 3a' that corresponds to EPU 2. Furthermore, the highlighted control element 2ae¹ that corresponds to EPU 2 is activated. The user, e.g., a pilot in charge can now actuate the highlighted control element 2ae¹ to individually power down EPU 2 via switching element 3ca'. No other propulsion unit 3a can be powered down. On the other hand, all switching elements 3da remain closed so that control element 2ae² can still be used to power up all propulsion units 3a with a single actuation gesture.

According to Figure 4, CAS is (fully) functional so that control panel architecture 2a receives all monitoring signals from sensor units (or monitoring system) 4.

According to Figure 4, there can be additional output to the user at reference number 2ah, e.g., in text form, which informs user of said failure or malfunctioning. There can be explicit reference to failure or malfunctioning of EPU 2.

As shown, element 2ah may not only display a warning massage but a message that is specific to the type of failure experienced by the propulsion unit 3a in question, e.g., overheating or the like ("UNIT2 OVERTEMP").

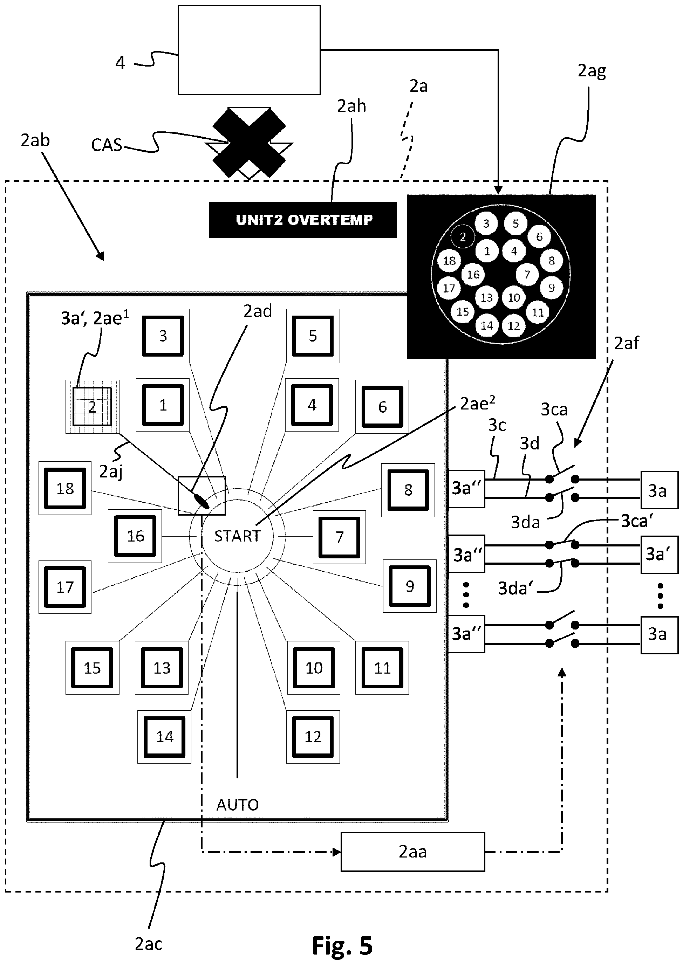

Figure 5 shows the case in which CAS is not working. In this way, control panel architecture 2a, i.e., data acquisition and processing unit 2aa does not receive any sensor information from monitoring system (sensor units) 4. Still, additional display 2ag indicates failure or malfunctioning of EPU 2. The user, e.g., the pilot in command, can then move selector 2ad to selecting control element 2ae¹ which corresponds to said malfunctioning propulsion unit 3a' EPU 2. Note that said control element 2ae¹ will not be lit or highlighted in this case. Depending on the selected state of selector 2ad, data acquisition and processing unit 2aa will then control relay 2af as shown in Figure 5, i.e., with all switching elements open apart from switching elements 3ca', 3da' associated with selected EPU 2. Consequently, the user will only be able to power down EPU 2 (by actuating corresponding control element 2ae¹) and to power up EPU 2 (by actuating control element 2ae²). Note that latter control element 2ae² does no longer function to power up all propulsion units 3a since selector 2ad is no longer in "AUTO" mode.

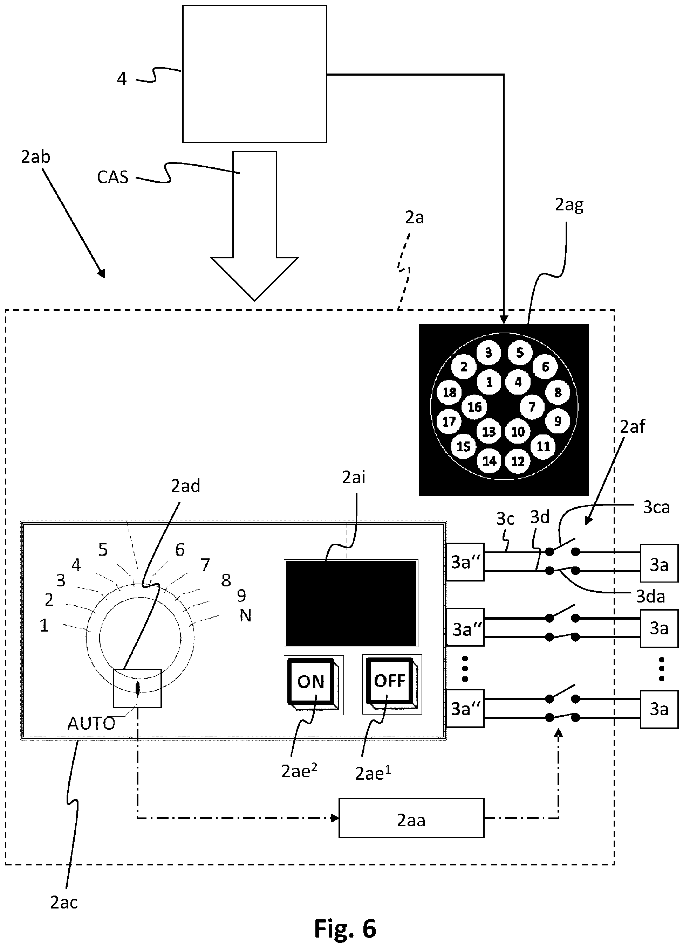

Figures 6 - 8 show a slightly different control panel architecture 2a, which differs from Figures 3 - 5 as far as the selector 2ad and the control elements 2ae¹, 2ae² are concerned.

As can be gathered from Figure 6, selector 2ad can still be used to select either an "AUTO" mode or individual EPUs, only nine of which are explicitly shown ("1" through "9"; the other ones are denoted with "N"). However, there are no individual control elements 2ae¹ for each EPU. Furthermore, there is no central "START" control element as in Figures 3 - 5.

According to Figure 6, there is an additional display element 2ai, and said control elements 2ae¹, 2ae² are devised in the form of two (hardware and/or software) buttons marked "ON" and "OFF", respectively.

In the case depicted in Figure 6, CAS and all propulsion units 3a work normally. Display 2ag indicates no failure or malfunctioning, and display 2ai is not lit. Control element 2ae¹ is not active, while relay 2af is devised so that all switching elements 3da are closed and control element 2ae² can be used to power up all of the propulsion units 3a simultaneously (selector 2ad in "AUTO" mode). In this way, the switching state of relay 2af corresponds to that shown in Figure 3.

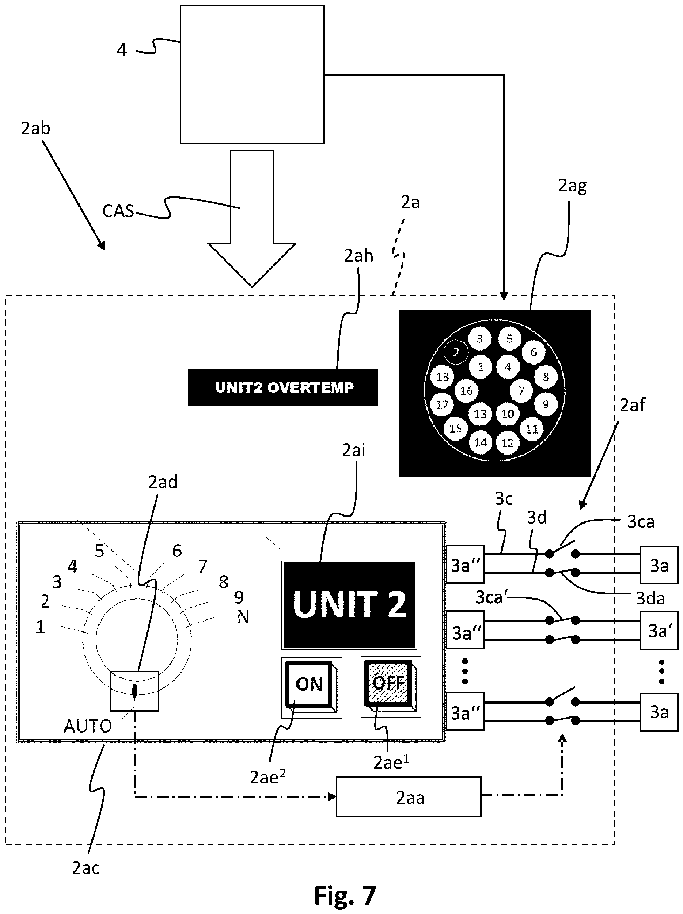

In the same way, the situation depicted in Figure 7 corresponds to that shown in Figure 4: EPU 2 experiences a malfunctioning or failure which is indicated on display 2ag and at 2ah. The "OFF" button which corresponds to control element 2ae¹ is lit, thus indicating that corresponding actuation will lead to powering off EPU 2 (3a'). Correspondingly, data acquisition and processing unit 2aa controls relay 2af as shown, which implies closing switching element 3ca' while all switching elements 3da remain closed. Therefore, control element 2ae² can still be used to power up all propulsion units 3a. Note that selector 2ad remains in "AUTO" mode. Display 2ai indicates an identifier for the malfunctioning or failed propulsion unit EPU 2, as shown ("UNIT 2").

Note that in case of Figure 7, control element 2ae¹ is highlighted or lights up automatically since control panel architecture 2a is in "AUTO" mode.

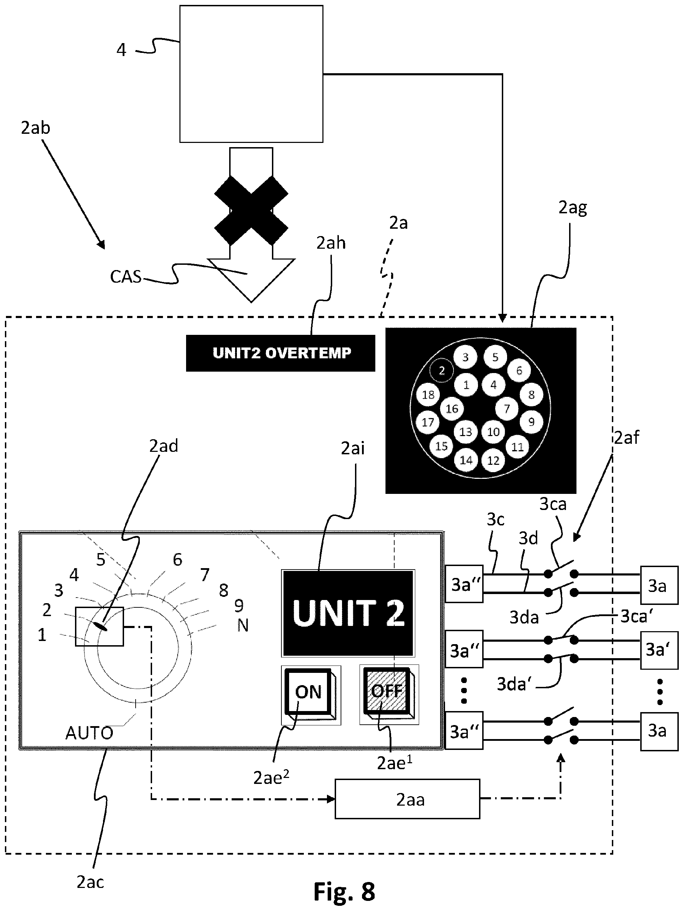

The situation of Figure 8 corresponds to that depicted in Figure 5, i.e. CAS has failed so that there is no automatic control or setup of control elements 2ae¹, 2ae², as previously explained. However, the user is still informed by means of display 2ag and warning element 2ah that a propulsion unit 3a', presently again EPU 2, has failed or experiences a malfunction. The user can then move selector 2ad to corresponding indication "2", upon which display 2ai will indicate the manually selected propulsion unit 3a' (EPU 2, "UNIT 2"). As further shown in Figure 8, the corresponding control element 2ae¹ will be highlighted or lights up - however, this will only happen upon said manual selection of EPU 2. In accordance with the selected mode, data acquisition and processing unit 2aa will control relay 2af as shown, which is in accordance with Figure 5. In other words: All switching elements 3ca, 3da are open, with the exception of switching elements 3ac', 3da' associated with manually selected failed/malfunctioning propulsion unit EPU 2. In this way, control element 2ae¹ can be used to power down selected propulsion unit EPU 2 only, while control element 2ae² can be used to power up selected propulsion unit EPU 2 only.

In all embodiments, display 2ag need not be part of the control panel architecture 2a but can be separate therefrom. This is indicated in the Figures by means of a separate data connection between monitoring system 4 and display 2ag so that display 2ag can still be active even if CAS is interrupted (cf. Figures 5 and 8).

In all cases, based on the selected operating mode, the state of CAS and the operational states of the propulsion units 3a, the operator is presented a limited choice of operating control options by means of only two control elements 2ae¹, 2ae² such that the risk of erroneous operation can be avoided.

As will be well understood by a person skilled in the art, the present invention is not limited to the described choice of graphical representation of display 2ac and its operating elements.

In connection with the above-defined Figures 3 - 8, it has been mentioned that certain control elements can be lit or highlighted in order to indicate their active state. In Figures 3 - 5, there are connecting lines between the central control element 2ae² ("START") and the individual control elements 2ae¹ associated with individual propulsion units, which control elements are arranged in the same geometrical pattern in which they are present within aircraft 1 (cf. Figure 1). This serves to guide the user (pilot in command) during aircraft operation. Furthermore, said connecting lines, one of which is denoted 2aj in Figure 5, could also be lit, highlighted or otherwise marked in order to indicate a (manual) selection of a corresponding propulsion unit 3a.

As explained in detail above, the proposed design prohibits the shutdown of all EPUs at once (preventing a so-called single point of failure). Only a simultaneous power-on of all EPUs is possible. If a specific EPU needs to be shut down, a proposed control panel architecture either automatically selects a specific EPU for which a critical condition was reported, or the user can select a specific EPU by turning or otherwise operating a control element towards this specific EPU which is then highlighted or otherwise marked and can subsequently be shut down by pressing the respective highlighted button or by actuating any other type of control element, as previously explained.

During power-on, when the pilot in command wants to start a flight, a default position of selector 2ad can be in "AUTO" mode. By pressing the "START" button or otherwise actuating a corresponding control element 2ae², all EPUs can be powered simultaneously. This reduces the pilot's workload tremendously and reduces the time required for the power-on sequence.

In case CAS is functional, signals regarding any critical condition (e.g., over-temperature or failure) of any EPU can be transmitted to the control panel architecture, and the latter automatically highlights the critical EPU which can then be shut down by operating a corresponding control element, as explained above.

In case data transmission by the CAS is erroneous or the corresponding signal line is interrupted, a manual selection of the specific EPU is possible, and then the selected EPU can be shut down subsequently by operating the corresponding control elements.

In Figures 6 - 8, the control element marked "ON" takes over the role of the above-mentioned "START" button. Once a critical state is reported to the control panel architecture, e.g., by means of the CAS, the critical EPU is indicated on display 2ai, and the "OFF" button associated with that particular EPU is highlighted. Subsequently, the critical EPU can be shut down by pressing said "OFF" button or by operating any other control element associated with said EPU. As explained before, in case there is a problem in the transmission of this critical state to the control panel architecture, the pilot in command can also manually select one specific EPU, e.g., by turning selector 2d. The selected EPU is then indicated on display 2ai and the "OFF" button is highlighted which can subsequently be pressed for shutting down the selected EPU. Again, the aforementioned types of operating elements are only indicated in exemplary fashion. Optionally, there is another display (display 2ag) which serves only to indicate a state of all EPUs (preferably in the same geometrical arrangement as in the actual aircraft design), on which the EPUs are displayed, e.g., as green when no critical state is reported. They can turn to red once a critical state is measured, sensed or calculated.

In the above-defined Figures, said critical state has been indicated on display 2ag by means of a black dot around the number that corresponds to the critical EPU in order avoid the use of colour in the drawings.

## Claims

1. A method of operating an aircraft (1) with multiple actuators, preferably multiple propulsion units (3), most preferably electrically powered propulsion units, comprising:
i) monitoring an operational state of said multiple actuators (3);
ii) when detecting a malfunctioning or failure of any one of said actuators (3), indicating said malfunctioning or failure to a pilot in command (2b) of the aircraft (1);
iii) controlling a human machine interface (2ab) of the aircraft (1) to display and enable a limited choice of possible operating measures in connection with said malfunctioning or failure to the pilot in command (2b);
and
iv) programming at least one control element (2ae, 2ae¹, 2ae²) in association with said one actuator (3) to perform said measures when actuated by the pilot in command (2b);
wherein in a first mode, step iii) is performed automatically upon detection of said malfunctioning or failure;
**characterized in that**
in a second mode, step iii) is performed upon selection of said one actuator (3) by a user, e.g., by the pilot in command.

2. The method of claim 1, comprising selecting said first mode or said second mode by means of user input.

3. The method of claim 1 or 2, wherein
step iii) comprises at least the measure of powering down said one actuator (3) by a user, in particular by programming of said control element (2ae¹) in step iv).

4. The method of claim 3, wherein
step iii) additionally comprises at least the measure of powering up a plurality of said actuators (3), preferably all of said actuators, by a user, in particular by programming of a common dedicated control element (2ae²).

5. The method of claim 4, wherein
step iii) additionally comprises at least the measure of powering up said one actuator (3) by a user, in particular by programming of a dedicated control element (2ae²).

6. A control panel architecture (2a) in an aircraft (1) with multiple actuators, preferably multiple propulsion units (3), most preferably electrically powered propulsion units, comprising:
a) a respective monitoring unit (4) associated with each actuator (3) for monitoring a condition thereof;
b) a data acquisition and processing unit (2aa) in connection with said monitoring units (4) for acquiring and processing condition data of said multiple actuators (3); and
c) a human machine interface unit (2ab) in connection with said data acquisition and processing unit (2aa), comprising:
ca) a display (2ac) controllable by said data acquisition and processing unit (2aa) to display a limited choice of possible operating measures in accordance with said condition data to a pilot in command (2b) of the aircraft (1); and
cb) at least one control element (2ae, 2ae¹, 2ae²) associable with at least one actuator (3) and controllable by said data acquisition and processing unit (2aa) to perform said measures when actuated by the pilot in command (2b);
**characterized in that**
the control panel architecture (2a) further comprises a selecting element (2ad) in connection with said data acquisition and processing unit (2aa) for selecting an operational mode thereof, wherein in a first operational mode said display (2ac) according to feature ca) and said at least one control element (2ae, 2ae¹, 2ae²) according to feature cb) is set up automatically,
and wherein in a second operational mode said display according (2ac) to feature ca) and said at least one control element (2ae, 2ae¹, 2ae²) according to feature cb) is set up in accordance with a state of said selecting element (2ad), in particular with a state that is associated with a selected one of said actuators (3);
wherein the selecting element (2ad) allows selecting between an automatic mode and a further mode for selecting any one of said multiple actuators (3), particularly manually by the pilot in command (2b), wherein said automatic mode corresponds to said first operational mode and said further mode corresponds to said second operational mode.

7. The control panel architecture (2a) of claim 6, wherein said at least one control element (2ae¹) is a power control element, particularly a power-down element for the at least one actuator (3), preferably for a malfunctioning or failing actuator.

8. The control panel architecture (2a) of claim 6 or 7, further comprising a relay unit (2af) in connection at least with said multiple actuators (3) for controlling an operational state thereof in accordance with actuation of said at least one control element (2ae, 2ae¹, 2ae²).

9. The control panel architecture (2a) of any one of claims 6 through 8, comprising at least two control elements (2ae¹, 2ae²), one for powering down the at least one actuator (3), preferably said malfunctioning or failing actuator according to claim 7, and one for powering up the at least one actuator (3), preferably said malfunctioning or failing actuator according to claim 7 or for powering up a plurality of said actuators (3), in particular all of said actuators (3).

10. The control panel architecture (2a) of any one of claims 6 through 9, further comprising an additional display (2ag) for displaying malfunctioning or failure of any one actuator (3) to the pilot in command (2b).

11. Aircraft (1) with multiple actuators, preferably multiple propulsion units (3), most preferably electrically powered propulsion units, comprising the control panel architecture (2a) according to any one of claims 6 through 10.

## Patentansprüche

1. Verfahren zum Betreiben eines Flugzeugs (1) mit mehreren Aktoren, vorzugsweise mehreren Vortriebseinheiten (3), am meisten vorzuziehen elektrisch angetriebenen Vortriebseinheiten, umfassend:
i) Überwachen eines Betriebszustands der mehreren Aktoren (3);
ii) bei Erfassen einer Fehlfunktion oder eines Ausfalls eines der Aktoren (3), Anzeigen der Fehlfunktion oder des Ausfalls für einen das Flugzeug (1) führenden Piloten (2b);
iii) Steuern einer Mensch-Maschine-Schnittstelle (2ab) des Flugzeugs (1) zum Anzeigen und Freischalten einer eingeschränkten Auswahl an möglichen Betriebsmaßnahmen im Zusammenhang mit der Fehlfunktion oder dem Ausfall für den das Flugzeug führenden Piloten (2b); und
iv) Programmieren mindestens eines Steuerelements (2ae, 2ae¹, 2ae²) in Zuordnung zu dem einen Aktor (3) zum Durchführen der Maßnahmen, wenn es von dem das Flugzeug führenden Piloten (2b) betätigt wird;
wobei, in einem ersten Modus, Schritt iii) automatisch nach Erfassen der Fehlfunktion oder des Ausfalls durchgeführt wird;
**dadurch gekennzeichnet, dass**
in einem zweiten Modus, Schritt iii) nach Auswahl des einen Aktors (3) durch einen Nutzer, z. B. durch den das Flugzeug führenden Piloten, durchgeführt wird.

2. Verfahren gemäß Anspruch 1, umfassend Auswählen des ersten Modus oder des zweiten Modus mittels einer Nutzereingabe.

3. Verfahren gemäß Anspruch 1 oder 2, wobei
Schritt iii) mindestens die Maßnahme des Herunterfahrens des einen Aktors (3) durch einen Nutzer, insbesondere durch Programmieren des Steuerelements (2ae 1) in Schritt iv), umfasst.

4. Verfahren gemäß Anspruch 3, wobei
Schritt iii) zusätzlich mindestens die Maßnahme des Hochfahrens einer Mehrzahl der Aktoren (3), vorzugsweise aller Aktoren, durch einen Nutzer, insbesondere durch Programmieren eines gemeinsamen dedizierten Steuerelements (2ae²), umfasst.

5. Verfahren gemäß Anspruch 4, wobei
Schritt iii) zusätzlich mindestens die Maßnahme des Hochfahrens des einen Aktors (3) durch einen Nutzer, insbesondere durch Programmieren eines dedizierten Steuerelements (2ae²), umfasst.

6. Steuerkonsolenarchitektur (2a) in einem Flugzeug (1) mit mehreren Aktoren, vorzugsweise mehreren Vortriebseinheiten (3), am meisten vorzuziehen elektrisch angetriebenen Vortriebseinheiten, umfassend:
a) eine jeweilige Überwachungseinheit (4), die je einem Aktor (3) zugeordnet ist, zum Überwachen von dessen Zustand;
b) eine Datenbeschaffungs- und -verarbeitungseinheit (2aa) in Verbindung mit den Überwachungseinheiten (4) zum Beschaffen und Verarbeiten von Zustandsdaten der mehreren Aktoren (3); und
c) eine Mensch-Maschine-Schnittstelleneinheit (2ab) in Verbindung mit der Datenbeschaffungs- und -verarbeitungseinheit (2aa), umfassend:
ca) eine Anzeige (2ac), die durch die Datenbeschaffungs- und -verarbeitungseinheit (2aa) steuerbar ist, eine eingeschränkte Auswahl möglicher Betriebsmaßnahmen gemäß den Zustandsdaten für einen das Flugzeug (1) führenden Piloten (2b) anzuzeigen; und
cb) mindestens ein Steuerelement (2ae, 2ae¹, 2ae²), das mindestens einem Aktor (3) zuordenbar ist und durch die Datenbeschaffungs- und -verarbeitungseinheit (2aa) steuerbar ist, um die Maßnahmen durchzuführen, wenn es durch den das Flugzeug führenden Piloten (2b) betätigt wird;
**dadurch gekennzeichnet, dass**
die Steuerkonsolenarchitektur (2a) ferner ein Auswahlelement (2ad) in Verbindung mit der Datenbeschaffungs- und -verarbeitungseinheit (2aa) zum Auswählen eines Betriebsmodus davon umfasst, wobei, in einem ersten Betriebsmodus, die Anzeige (2ac) gemäß Merkmal ca) und das mindestens eine Steuerelement (2ae, 2ae¹, 2ae²) gemäß Merkmal (cb) automatisch eingerichtet werden, und wobei, in einem zweiten Betriebsmodus, die Anzeige (2ac) gemäß Merkmal ca) und das mindestens eine Steuerelement (2ae, 2ae¹, 2ae²) gemäß Merkmal cb) gemäß einem Zustand des Auswahlelements (2ad) eingerichtet werden, insbesondere bei einem Zustand, der einem Ausgewählten der Aktoren (3) zugeordnet ist;
wobei das Auswahlelement (2ad) ein Auswählen zwischen einem automatischen Modus und einem weiteren Modus zum Auswählen eines der mehreren Aktoren (3), insbesondere manuell durch den das Flugzeug führenden Piloten (2b), erlaubt, wobei der automatische Modus dem ersten Betriebsmodus entspricht und der weitere Modus dem zweiten Betriebsmodus entspricht.

7. Steuerkonsolenarchitektur (2a) gemäß Anspruch 6, wobei das mindestens eine Steuerelement (2ae¹) ein Leistungssteuerungselement, insbesondere ein Herunterfahrelement für den mindestens einen Aktor (3), vorzugsweise für einen fehlfunktionierenden oder ausfallenden Aktor ist.

8. Steuerkonsolenarchitektur (2a) gemäß Anspruch 6 oder 7, ferner umfassend eine Relaiseinheit (2af) in Verbindung mit mindestens den mehreren Aktoren (3) zum Steuern von deren Betriebszustand gemäß einer Betätigung des mindestens einen Steuerelements (2ae, 2ae¹, 2ae²).

9. Steuerkonsolenarchitektur (2a) gemäß einem der Ansprüche 6 bis 8, umfassend mindestens zwei Steuerelemente (2ae¹, 2ae²), eines zum Herunterfahren des mindestens einen Aktors (3), vorzugsweise des fehlfunktionierenden oder ausfallenden Aktors gemäß Anspruch 7, und eines zum Hochfahren des mindestens einen Aktors (3), vorzugsweise des fehlfunktionierenden oder ausfallenden Aktors gemäß Anspruch 7, oder zum Hochfahren einer Mehrzahl der Aktoren (3), insbesondere aller Aktoren (3).

10. Steuerkonsolenarchitektur (2a) gemäß einem der Ansprüche 6 bis 9, ferner umfassend eine zusätzliche Anzeige (2ag) zum Anzeigen einer Fehlfunktion oder eines Ausfalls eines Aktors (3) für den das Flugzeug führenden Piloten (2b).

11. Flugzeug (1) mit mehreren Aktoren, vorzugsweise mehreren Vortriebseinheiten (3), am meisten vorzuziehen elektrisch angetriebenen Vortriebseinheiten, umfassend die Steuerkonsolenarchitektur (2a) gemäß einem der Ansprüche 6 bis 10.

## Revendications

1. Procédé de fonctionnement d'un aéronef (1) avec de multiples actionneurs, de préférence de multiples unités de propulsion (3), avec le plus de préférence des unités de propulsion alimentées électriquement, comprenant :
i) surveiller un état opérationnel desdits multiples actionneurs (3) ;
ii) lors de la détection d'un dysfonctionnement ou d'une défaillance de l'un quelconque desdits actionneurs (3), indiquer ledit dysfonctionnement ou ladite défaillance à un pilote aux commandes (2b) de l'aéronef (1) ;
iii) commander une interface homme-machine (2ab) de l'aéronef (1) pour afficher et activer un choix limité de mesures de fonctionnement possibles en ce qui concerne ledit dysfonctionnement ou ladite défaillance au pilote aux commandes (2b) ; et
iv) programmer au moins un élément de commande (2ae, 2ae¹, 2ae²) en association avec ledit actionneur (3) pour réaliser lesdites mesures lors d'un actionnement par le pilote aux commandes (2b) ;
dans lequel, dans un premier mode, l'étape iii) est réalisée automatiquement à une détection dudit dysfonctionnement ou de ladite défaillance ;
**caractérisé en ce que**
dans un deuxième mode, l'étape iii) est réalisée à une sélection dudit actionneur (3) par un utilisateur, par exemple par le pilote aux commandes.

2. Procédé selon la revendication 1, comprenant de sélectionner ledit premier mode ou ledit deuxième mode au moyen d'une entrée d'utilisateur.

3. Procédé selon la revendication 1 ou 2, dans lequel
l'étape iii) comprend au moins la mesure de la mise hors tension dudit actionneur (3) par un utilisateur, en particulier par la programmation dudit élément de commande (2ae¹) à l'étape iv).

4. Procédé selon la revendication 3, dans lequel
l'étape iii) comprend en outre au moins la mesure de la mise sous tension d'une pluralité desdits actionneurs (3), de préférence de l'intégralité desdits actionneurs, par un utilisateur, en particulier par la programmation d'un élément de commande dédié commun (2ae²).

5. Procédé selon la revendication 4, dans lequel
l'étape iii) comprend en outre au moins la mesure de la mise sous tension dudit actionneur (3) par un utilisateur, en particulier par la programmation d'un élément de commande dédié (2ae²).

6. Architecture de panneau de commande (2a) dans un aéronef (1) avec de multiples actionneurs, de préférence de multiples unités de propulsion (3), avec le plus de préférence des unités de propulsion alimentées électriquement, comprenant :
a) une unité de surveillance (4) respective associée à chaque actionneur (3) pour la surveillance d'un état de celui-ci ;
b) une unité d'acquisition et de traitement de données (2aa) en relation avec lesdites unités de surveillance (4) pour acquérir et traiter des données d'état desdits multiples actionneurs (3) ; et
c) une unité d'interface homme-machine (2ab) en relation avec ladite unité d'acquisition et de traitement de données (2aa), comprenant :
ca) un affichage (2ac) pouvant être commandé par ladite unité d'acquisition et de traitement de données (2aa) pour afficher un choix limité de mesures de fonctionnement possibles en fonction desdites données d'état à un pilote aux commandes (2b) de l'aéronef (1) ; et
cb) au moins un élément de commande (2ae, 2ae², 2ae²) pouvant être associé à au moins un actionneur (3) et pouvant être commandé par ladite unité d'acquisition et de traitement de données (2aa) pour réaliser lesdites mesures lors d'un actionnement par le pilote aux commandes (2b) ;
**caractérisée en ce que**
l'architecture de panneau de commande (2a) comprend en outre un élément de sélection (2ad) en relation avec ladite unité d'acquisition et de traitement de données (2aa) pour sélectionner un mode de fonctionnement de celui-ci, dans laquelle dans un premier mode opérationnel ledit affichage (2ac) selon une caractéristique ca) et ledit au moins un élément de commande (2ae, 2ae¹, 2ae²) selon une caractéristique cb) sont configurés automatiquement, et dans laquelle dans un deuxième mode opérationnel ledit affichage (2ac) selon une caractéristique ca) et ledit au moins un élément de commande (2ae, 2ae¹, 2ae²) selon une caractéristique cb) sont configurés selon un état dudit élément de sélection (2ad), en particulier selon un état qui est associé à l'un sélectionné desdits actionneurs (3) ;
dans laquelle l'élément de sélection (2ad) permet la sélection entre un mode automatique et un autre mode pour sélectionner l'un quelconque desdits multiples actionneurs (3), en particulier manuellement par le pilote aux commandes (2b), dans laquelle ledit mode automatique correspond audit premier mot opérationnel et ledit autre mode correspond audit deuxième mode opérationnel.

7. Architecture de panneau de commande (2a) selon la revendication 6, dans laquelle ledit au moins un élément de commande (2ae¹) est un élément de commande de puissance, en particulier un élément de mise hors tension de l'au moins un actionneur (3), de préférence pour un actionneur en dysfonctionnement ou défaillant.

8. Architecture de panneau de commande (2a) selon la revendication 6 ou 7, comprenant en outre une unité de relais (2af) en relation au moins avec lesdits multiples actionneurs (3) pour commander un état opérationnel de ceux-ci selon un actionnement dudit au moins un élément de commande (2ae, 2ae¹, 2ae²).

9. Architecture de panneau de commande (2a) selon l'une quelconque des revendications 6 à 8, comprenant au moins deux éléments de commande (2ae¹, 2ae²), l'un pour la mise hors tension de l'au moins un actionneur (3), de préférence ledit actionneur en dysfonctionnement ou défaillant selon la revendication 7, et l'autre pour la mise sous tension de l'au moins un actionneur (3), de préférence ledit actionneur en dysfonctionnement ou défaillant selon la revendication 7 ou pour la mise sous tension d'une pluralité desdits actionneurs (3), en particulier de l'intégralité desdits actionneurs (3).

10. Architecture de panneau de commande (2a) selon l'une quelconque des revendications 6 à 9, comprenant en outre un affichage supplémentaire (2ag) pour afficher un dysfonctionnement ou une défaillance d'un quelconque actionneur (3) au pilote aux commandes (2b).

11. Aéronef (1) avec de multiples actionneurs, de préférence de multiples unités de propulsion (3), avec le plus de préférence des unités de propulsion alimentées électriquement, comprenant l'architecture de panneau de commande (2a) selon l'une quelconque des revendications 6 à 10.
